# EUROPEAN PATENT SPECIFICATION

(11) **EP 2 135 161 B1**
(45) Date of publication and mention of the grant of the patent: **20.05.2015**
(21) Application number: 06851251.6
(22) Date of filing: 29.12.2006
(51) Int. Cl.: G06F 9/445

(54) **MANAGEMENT OF DATA FOR INSTALLATION ON A REMOTE DEVICE**
VERWALTUNG VON DATEN ZUR INSTALLATION AN EINER ABGESETZTEN VORRICHTUNG
GESTION DE DONNÉES POUR DES OPÉRATIONS D'INSTALLATION SUR UN DISPOSITIF À DISTANCE

(43) Date of publication of application: 23.12.2009
(73) Proprietor: SAP SE, 69190 Walldorf (DE)
(72) Inventor: SCHLETZ, Bernard, 69190 Walldorf (DE); KNOBLAUCH, Bernhard, 69190 Walldorf (DE); BHATT, Ankur, 69190 Walldorf (DE); KOTHANDARAMAN, Ramprasadh, 69190 Walldorf (DE)
(74) Representative: Müller-Boré & Partner Patentanwälte PartG mbB
(86) International application number: PCT/IB2006/004273
(87) International publication number: WO 2008/084274

(56) References cited:
- WO-A1-01/93030
- US-A- 6 105 063
- US-A1- 2003 056 207
- US-A1- 2003 056 207
- US-A1- 2005 075 115

## Description

### BACKGROUND

With the increasing dependence on computing technologies, organizations are required to build information technology departments to handle the computing needs within their organizations. Large organizations spend substantial resources setting up and maintaining devices for their employees.

Particularly cumbersome are mobile devices. Mobile devices often require more maintenance. First, mobile devices are more susceptible to catastrophic failures because users more readily drop or damage them in transport. Each catastrophic failure requires the data and applications to be reinstalled on the units. Second, multiple users with different responsibilities often simultaneously use a single device. For example, a marketing department may assign one of a pool of available laptop computers to a salesman for a presentation on a particular day. Third, mobile devices often lack continuous connectivity to network storage. This means that all data required for an application must be resident on the device itself. Each time updates to the central data store occur, the updates must be propagated to the mobile devices. Fourth, technicians are required to compare the data storage and processing capabilities of the mobile devices against the requirements of the data and applications to be installed on the devices. The comparison must be performed each time that the data and application requirements change for the target user's work responsibilities.

In addition to requiring greater maintenance, deploying mobile devices often requires employees to make decisions ill suited to their roles. Human resources employees understand the roles and responsibilities of employees, but they are unfamiliar with the technical requirements and capabilities of mobile devices. Technicians configure mobile devices, but they lack an understanding of the data and applications required by various employee roles. Translations between the various departments responsible for equipping employees with the appropriate mobile devices may be poor.

As a result, installing data and applications on to a mobile device often requires extensive employee time and resources. In addition, the data installed often does not match precisely the data required for the tasks to be performed with the mobile device. Either too much or too little data is installed on the mobile device. Finally, the installed data is often static and is not updated with any changes to the actual copies of the data in other parts of the organization. Finally, updating the data is often a time consuming task when responsibilities for a user change or when new users are assigned to the mobile device. It is desirable for systems and methods to stream line the set up and maintenance of mobile devices.

US 2003/056207 A1 relates to a process for deploying and installing software including a platform-independent framework and offline applications, on devices, such as a personal digital assistant, Internet-enabled phone, handheld computer, laptop computer or desktop computer, that is remotely located from a central computer system. The framework and applications permitting the devices to run applications offline and synchronize data with the central computer system.

WO 01/93030 A1 relates to a method to automatically set up a computer system configuration in association with a system upgrade that involves the installation of a set of operative elements necessary for the reliable operation of the same. The correct, operative combination of hardware, system and application software components is accomplished by inter-component dependency checking and conflict resolving procedures in association with specific dependency rules tables and an ordered database that stores definitions of components and relationships thereof.

### BRIEF DESCRIPTION OF THE DRAWINGS OF THE EXAMPLE EMBODIMENTS

Fig. 1 depicts a block diagram of an example system, according to an example embodiment of the present invention.
Fig. 2 depicts a block diagram of an example system, according to another example embodiment of the present invention
Fig. 3 depicts an example procedure, according to an example embodiment of the present invention.

### DETAILED DESCRIPTION OF THE EXAMPLE EMBODIMENTS

Generally, example embodiments are described that streamline the set up and maintenance of remote devices. A device component may map a physical device to a user responsibility. A responsibility component may map a user to a user responsibility. A data aggregation component may gather the data and applications associated with a responsibility by examining the responsibility component. The data and applications may include references to additional components including other data and applications needed for the responsibility. The data aggregation component may collect all of the data and applications by following the chain of dependencies associated with the responsibility component. An administrator may consult the data and applications collected in an installation component to determine what data and applications to install on the remote device for the user. In the alternative, an installation component may automatically install the data and applications on the remote device without intervention by the administrator. A data monitoring component may monitor the responsibilities assigned to the user. If a change exists, the data aggregation component may update the data and applications in the data aggregation component. The data monitoring component may also monitor the data and applications throughout the chain of dependencies and update the data and applications accordingly.

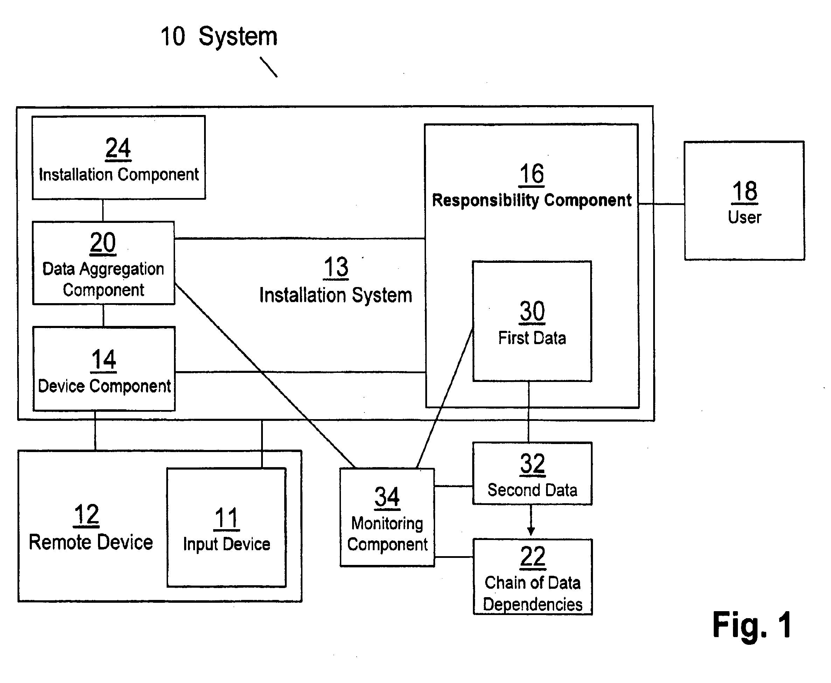

Fig. 1 depicts a block diagram of an example system, according to an example embodiment of the present invention. A system 10 includes a remote device 12. An installation system 13 may manage the data and applications to be installed on the remote device 12. The installation system 13 may include a responsibility component 16 that may map a user 18 of the remote device 12 to a responsibility. The responsibility may be assigned to the user 18 and may indicate a task for which the user 18 is responsible. The installation system 13 may include a device component 14 that may map the remote device 12 to the responsibility component 16. A data aggregation component 20 may collect the data and applications associated with the responsibility.

The responsibility component 16 may include a first data 30. The first data 30 may include data and applications required to perform the responsibilities associated with the responsibility component 16. The data aggregation component 20 may gather the first data 30. The first data 30 may include references to a second data 32. References from first data 30 to second data 32 may include references (such as network addresses of second data 32). The data aggregation component 20 may gather the second data 32 by following the references found in first data 30. The data aggregation component 20 may follow the chain of data dependencies 22. The data aggregation component may collect all of the data and applications throughout the chain of data dependencies 22.

An installation component 24 may facilitate the installation of the data collected by the data aggregation component 20 on to the remote device 12. A monitoring component 34 may monitor the first data 30, second data 32, and the other data through the chain of data dependencies 22 for any changes to the data and applications. If a change is found, the monitoring component 34 may invoke the data aggregation component 20 to collect the changed data.

In this way, the installation of data and applications on to a user's remote device may be streamlined. First, when a user of the remote device is replaced with another user with the same responsibilities, the data and applications may remain on the remote device. This may occur because the data and applications may be associated with the user's responsibility, not the user. The need for additional time to reload data and the extra bandwidth needed to upload the data may thus be reduced. Second, the data and applications associated with multiple users having multiple responsibilities may be independently installed and managed on a single device.

Third, often data installations may involve employees who lack the relevant skills in an area to make decisions in those areas. For example, human resource managers may assign remote devices to users without a full understanding of the device's capabilities and whether the device will most efficiently serve the user's needs. The abstraction of remote devices and user responsibilities may permit human resources employees to focus on assigning users to the proper responsibilities tasks and may allow computer technicians to make decisions regarding the remote devices.

Fourth, the business processes may automatically be synchronized with the system administration tasks. Any changes in the responsibilities that are assigned to a user, what users are assigned to a remote device, or changes in the data and applications associated with a user responsibility may be automatically reflected in the data collected by the data aggregation component. The data aggregation component may automatically remove data or add to the collected data as changes occur.

The remote device 12 may be a device used by an employee to perform his responsibilities. Remote device 12 may include mobile devices such as PDA's, cellular phones, laptop computers, and the like. Alternatively, the remote device may be a non-portable device, such as a desktop computer. The remote device 12 may include generalized computing hardware and software. Hardware may include one or more of the following: random access memory, such as flash memory, long term storage, such as a hard drive, an input device, such as a keyboard or touch screen, and a processor. The processor may include a generalized computing processor or a specialized processor designed for particular applications. Alternatively, the remote device may include hardware such as barcode scanners, GPS receivers, cellular phone antennas, infrared readers, and the like. The remote device 12 may include software, such as an operating system and applications. These applications may support the tasks performed by the user. For example, a remote device used by a land surveyor may include an application that allows maps to be drawn and annotations of land boundaries to be incorporated into the maps. In another example embodiment, the remote device for an automobile mechanic may include a portable document format ("PDF") viewer to view manuals for the various parts of an automobile engine.

The remote device 12 may include an input device 11 that allows data and applications to be installed on the remote device. The input device 11 may include a network port, modem port, USB connection, infrared connection, WIFI connection, CD or DVD ROM device, or the like. In one example embodiment, a system administrator may install data and applications required for the user responsibilities on to the remote device 12 via the input device. For example, the system administrator may copy the data and applications from the installation component 24 on to a DVD. The administrator may then place the DVD into a DVD ROM drive on the remote device 12. The administrator may copy the data from the DVD on to an internal storage device on the remote device 12 and run the installation packages to install the necessary software on to the remote device 12. In an alternative example embodiment, the remote device 12 may be in communication with the installation system 13 over a wide area network. For example, an installation system 13 may exist in a central office, and the remote device 12 may be connected to a network in a remote office. The installation system 13 may automatically upload the data and applications from the installation component 24 on to the remote device 12 via the wide area network. To facilitate installation, the remote device 12 may include software that may permit the installation system 13 to gain access to the storage of the remote device 12 and to add and remove data to the storage.

In one example embodiment, the installation system 13 may be a server. For example, the remote device 12 may connect to the installation system 13 over a computer network and initiate the upload of data and applications from the installation system 13. Alternatively, the installation system 13 may be a stand alone system. For example, the installation system 13 may be a workstation at the installation center. An administrator may copy the data and applications from the installation component 24 on to removable storage, such as a CD ROM, DVD ROM, USB thumb key, external hard drive, or the like.. The data may then be installed on to the remote device 12 by connecting the removable storage to the remote device and initiating the transfer of the data and applications.

The installation system 13 may store the relationship between a user 18 and his associated responsibilities. Each responsibility may include a particular task for which the user 18 is responsible. For example, an automobile mechanic may have the responsibilities of performing oil changes, repairing breaks, and the like. The individual responsibilities assigned to the user 18 may be stored in a responsibility component 16. Alternatively, each responsibility-user pair may be stored in a separate responsibility component. The responsibility component 16 may be stored in the form of a software object with methods to get, set, and manipulate the responsibilities stored therein. For example, the responsibility component 16 may include an internal variable for storing the responsibilities for the user 18. In various example embodiments, the variable may be in the form of an array or list. The responsibility component 16 may include methods addResponsibility(), getListOfResponsibilities(), removeResponsibility(), clearResponsibilities(), and the like that assign an additional responsibilities to the user 18, return all responsibilities assigned to the user 18, remove a responsibility from a user 18, and remove all responsibilities assigned to the user 18 respectively. In an alternative example embodiment, the responsibility component may be a database table or set of tables in which table references embody the relationship between users and their responsibilities. For example, a database table may include the fields UserID and Responsibility. The UserID field may include identifiers corresponding to the identification number for the users. The Responsibility field may include identifiers corresponding to the responsibilities for the user. An example entry may include a UserID of "999" and a Responsibility of "Repair Engines." Another example entry may include a UserID of "999" and a Responsibility of "Install Sound Systems." In this example, the user having the UserID of 999 may be responsible for repairing engines of all cars and installing sound systems in those cars. In an example embodiment, the responsibility component may include more than one user and the responsibilities assigned to those multiple users.

The responsibility component 16 may also store the data and applications 30 required for each of the responsibilities assigned to the user 18. Data may constitute any data required to perform the associated task, including product schematics, contact phone numbers for technical support, email related to the task, product manuals, customer contact information, price lists, maps, and the like. The type of data stored may be limitless. Likewise, the responsibility component 16 may store the applications needed for the project, including email clients, diagnostic programs, PDF viewers, barcode scanning software, and the like. The types of applications stored may also be limitless. In one example embodiment, the data and applications 30 may be the precise set of data and applications required to perform the task and may exclude all superfluous data and applications. In this way, the installation and maintenance of the data and applications on the remote device 12 may be streamlined because only the required data may be placed on remote device 12.

In an alternative example embodiment, the responsibility component 16 may store references to the data and applications 30 instead of the data and applications 30 themselves. For example, the data and applications 30 may be distributed throughout the internal network of the organization or across the internet. The responsibility component 16 may store the network addresses of the data and applications 30, such as URLs and the like.

Each responsibility may be associated with one or more data sets or applications. In this way, the data and applications may be quickly updated as the user 18's responsibilities change. Adding a new responsibility may entail adding a new set of data to the responsibility component 16. Removing a responsibility may simply mean deleting the data and applications associated with the responsibility from the responsibility component 16. In one example embodiment, the data and applications for a particular responsibility may be associated with the responsibility in a way similar to the way that the user 18 is associated with the responsibility. For example, where the user-responsibility relationship is stored in a software object, additional methods addData(), addApplication(), removeData(), and removeApplication() may allow data and applications for the responsibility to be managed. An internal variable may store the data and applications as they are added. In another example, where a database table stores the user-responsibility relationships, each data and application may be stored as a new table entry. For example, in reference to the forgoing database example, a new field, "Data" may store the actual data, such as phone numbers, or may include a reference to a location where the data, such as a product manual, may be found.

Selection of the data and applications required for each responsibility may be performed by a manager of the organization with knowledge of the data and applications needed to perform each task. For example, the manager may collect the data files needed for the task and place them in a network visible folder. Data files may include word processing documents, electronic business cards, emails, spreadsheets, graphics files, and the like. Applications may be collected and stored in the same folder. In one example embodiment, the applications may be stored as self executing files that, when run, automatically install the application on the target device. The manager may initiate a call to upload the data into the responsibility component 16 from the folder. Alternatively, the responsibility component 16 may include a reference pointer to the network folder.

In an alternative example embodiment, the data and applications may be selected automatically. The installation system 13 may include selection hardware or software that automatically determines the data and applications required to perform the user responsibility and gathers the data and applications.

In one example embodiment, the first data 30 may be associated with other dependent data and applications. In turn, the dependent data and applications, represented in Fig. 1 by the second data 32, may themselves include references to additional, dependent data and applications, represented by the chain of dependencies 22. The dependent data and applications may include any data and applications required to perform the responsibility but which may not be immediately apparent from the tasks of the responsibility. For example, the responsibility may include the task of repairing a turbine engine assembly. The manual for the task may be identified and included in the responsibility component 16. The turbine engine may include various parts manufactured by independent manufacturers. The second data 32 may include the manuals for these parts. In another example, the manual for the turbine engine may be a PDF file, and the second data 32 may include a PDF viewer application needed to view the manual.

The data aggregation component 20 may aggregate the data and applications required for the user responsibility on to the remote device 12. The data and aggregation component 20 may gather the first data 30. The data and aggregation component 20 may also gather the data throughout the chain of dependencies 22, including gathering the second data 32.

In one example embodiment, the first data 30 may include explicit references to the second data 32. For example, the first data 30 may include a hyperlinked troubleshooting manual. The second data 32 may include data and applications that may be retrieved by following the hyperlinks in the troubleshooting manual. To automatically gather this data, the data aggregation component 20 may include a rule that fetches the data at any hyperlink and adds the data to the set of gathered data. In another example, the first data 30 may include keywords recognized by the data aggregation component 20. When a keyword is encountered, the data aggregation component 20 may perform an operation to retrieve data associated with the keyword. For example, the first data 30 may include files with extensions .pdf and .ps. These files may be opened using a PDF viewer and Postscript viewer respectively. The data aggregation component 20 may retrieve a PDF viewer and a Postscript viewer from the internet and add these applications to the gathered data.

In another example embodiment, an administrator may examine the first data 30 and manually gather the additional data referred to in the first data 30. The administrator may collect the data and applications and place them in the data aggregation component 20.

The installation system 13 may store relationships between remote devices and responsibilities. The device component 14 may map a remote device 12, or a group of remote devices, to a responsibility component 16 or a group of responsibility components. For example, a user having a responsibility may be assigned to multiple remote devices, requiring responsibility component to remote device relationships to be one to many. Alternatively, a single remote device may be shared among various users, each being assigned to a different responsibility. In this case, the relationship between responsibility component to remote device may be a many to one relationship. In one example embodiment, the device component may be stored as a software object, including methods to set and retrieve the internal variables therein. Alternatively, the relationship between the responsibility component and the remote device may be stored in a database table. The specific implementation of the device component, unless otherwise specified, is immaterial to the present invention.

The device component 14 may store a reference to the remote device 12. The remote device 12 may be associated with a remote device identifier. Whenever the installation system 13 refers to the remote device, it may identify the remote device with the identifier. For example, the remote device identifier may exist as a network address. The installation system 13 may query the network to locate the remote device 12 whenever it is required to contact the remote device 12. Servers on the network may forward the communications from the installation system to the remote device 12 by using the network address. In an alternative example, the remote device may be identified with an identifier internal to the installation system 13. In this case, the installation system 13 may include a translation system configured to translate between real addresses of the remote device and internal identifiers within the installation system 13.

To denote a relationship between a device component and a responsibility component, the device component 14 may store the responsibility component 16 or may store a reference to it. Likewise, the data component 16 may additionally store the data aggregation component 20 or may store a reference to it.

To install the data and applications on to the remote device 12, the installation component 24 may receive the data and applications from the data aggregation component 20. The installation component 24 may automatically upload the data to the remote device 12 by sending the data over a data communications channel. The data may be received by the input device 11 of the remote device 12. The input device 11 may locate the appropriate portion of the internal storage for the data, such as the user's home directory, and place the data in that location. For applications, the input device 11 may initiate a process to run the installation packages. The installation packages may install the applications on the remote device 12 automatically. In one example embodiment, the installation component 24 may include software configured to proxy into the remote device 12. The input device 11 may include authentication software configured to authenticate the installation component 24. Thereafter, the input device 11 may receive commands from the installation component 24 to write to or delete from the internal storage on the remote device 12. In addition, the input device 11 may receive commands to run the uploaded application packages. The input device 11 may translate the received commands into actual read, write, and execute operations on the remote device 12. In this way, the installation component 24 may automatically install the data and applications on to the remote device 12.

In another example embodiment, the remote device 12 may initiate the installation of the data and applications. The remote device 12 may include software that polls the installation system 13 for any data and applications to be installed on the remote device 12. The installation component 24 may search through the device components to determine whether the remote device 12 is scheduled for any installations. The device component 14 may include a flag which is set if data and applications are to be installed on the remote device 12. Upon encountering a set flag for the remote device 12, the installation component 24 may send the data and applications to be installed on the remote device 12 as a response. For example, the installation component 24 may retrieve the data and applications aggregated at the folder location stored in the responsibility component 16 and send the data and applications to the remote device 12. The remote device 12 may thus install the received data and applications.

In yet another example embodiment, the data and applications may be installed by an administrator manually on the remote device. This situation may occur where the remote device 12 is not network enabled or is purposefully not connected to the network, such as for security reasons. The administrator may download the data and applications from the installation component 24 onto removable storage and upload the data and applications on to the remote device 12 by copying the data from the removable storage on to the remote device 12.

In one example embodiment, the installation system 13 may monitor for changes that affect the data that is distributed on the remote device 12. Changes may include adding or removing responsibilities assigned to the current user in the responsibility component 16, updating the first data 30, updating the data throughout the chain of dependencies 22, and the like. For example, updates to the first data 30 and updates to the data and applications throughout the chain of dependencies may include new versions of software, new versions of documents, updated phone numbers, and the like.

In one example embodiment, the monitoring component 34 may automatically determine or be notified that a different user with different responsibilities is assigned to the responsibility component 16. For example, the monitoring component 34 may store a snapshot of the responsibility component 16 and periodically check to see whether the responsibility component 16 matches the snapshot stored. If a change is detected, the monitoring component 34 may invoke the data aggregation component 20 to update the data and applications associated with the user.

In one example embodiment, the data aggregation component 20 may determine whether the responsibilities stored in the responsibility component are different from when the data and applications associated with the user were collected. The data aggregation component may compare the responsibilities within the responsibility component 16 with the snapshot of responsibilities from the last collection run. If a change is detected, the data aggregation may update the data and applications accordingly. For example, if a responsibility appearing in the snapshot is absent from the current responsibilities in the responsibility component 16, then the data aggregation component 20 may remove the data and applications with the absent responsibility. Similarly, if a new responsibility appears in the current responsibilities, the data aggregation component 20 may collect the data and applications associated with the new responsibility, along with the data and applications throughout the chain of dependencies for the new responsibility. The data aggregation component 20 may add this data and applications to the collected data and applications for the user 18.

In another example embodiment, the monitoring component 34 may automatically compare the data and applications collected for the user 18 with the most current instances of those data and applications to determine if any changes to the stored data and applications have occurred. The monitoring component 34 may retrieve the current instances of the collected data and applications and compare each data and application in turn. If a change is detected, the monitoring component 34 may send the current instance of the data or application to the data aggregation component 20. The data aggregation component 20 may update the collected data and applications with the new instance. For example, each of the collected data and applications may include references to a location, locally or over a network, where the current instance of the data or application exists. The monitoring component 34 may request the current instance found at the address and perform the comparison.

In one example embodiment, the chain of dependencies 22 may include a cascading series of data that may depend on the data and applications in second data 32. For example, the second data 32 may include a product manual. The product manual may include an internet link to supplemental information for the manual, such as updated errata. The errata information may include contact information for the company that manufactured the product for which the manual was written. The errata may include links to patches that need to be installed to address errors in the application. The application may include a reference to an installer to install the patch in the application. The installer itself may include further references. By following the chain of dependencies, all data and applications may be collected for the user responsibility.

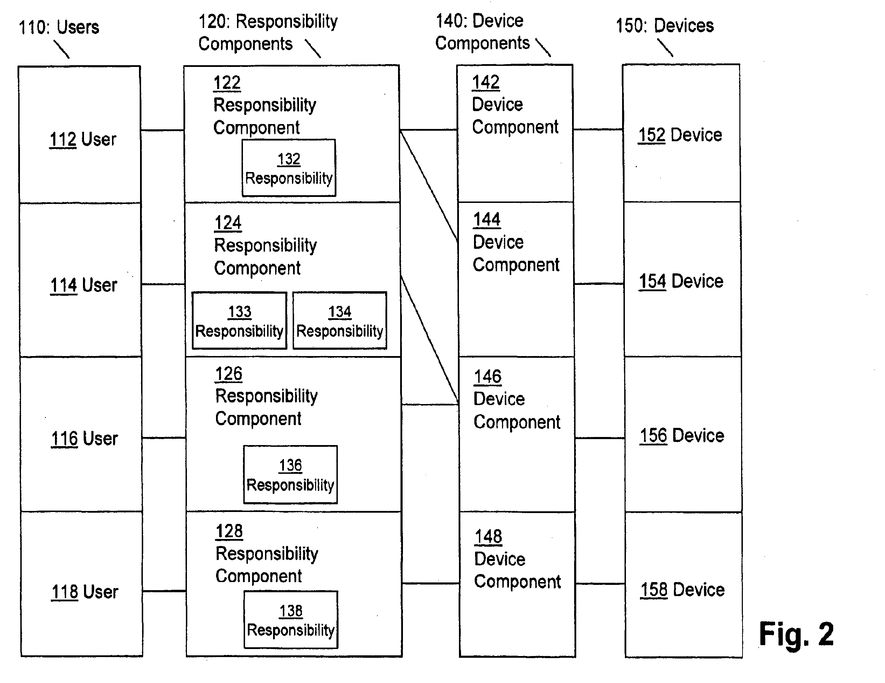

Fig. 2 depicts a block diagram of an example system, according to an example embodiment of the present invention. The block diagram depicts example relationships between users 110, responsibility components 120, device components 140, and devices 150. A user 112 may be assigned to a responsibility 132 that may be stored within a responsibility component 122. A user 114 may be assigned to responsibilities 133 and 134, stored within responsibility component 124. Users 116 and 118 may be assigned to responsibilities 136 and 138 respectively. Responsibilities 136 and 138 may be stored within responsibility components 126 and 128 respectively. The responsibility component 122 may be associated with two device components 142 and 144, for example where a user may be assigned to two devices to carry out their tasks. Device component 146 may be associated with responsibility components 124 and 126, for example where a device may be shared between two users with different responsibilities. A device component 148 may be associated with a responsibility component 128. Each of the device components 142, 144, 146, and 148 may be assigned to a device 152, 154, 156, and 158 respectively.

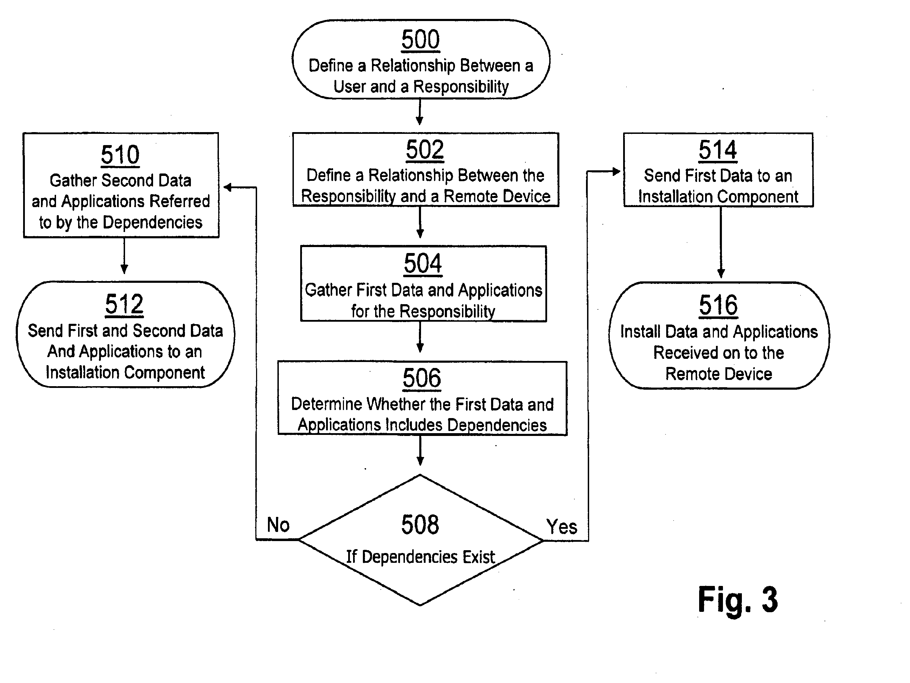

Fig. 3 depicts an example procedure, according to an example embodiment of the present invention. A relationship between a user and a responsibility may be defined (block 500). This relationship may be captured in a responsibility component, for example, in the form of a software object or a set of database tables. In one example embodiment, the user may be represented by a user identifier, such as an integer. In another example embodiment, a software object may store the identifying information for the user, such as name, employee ID, address, phone number, and the like. In various example embodiments, the responsibility may be stored as an identifier, a software object, and the like. For example, a user identified by UID = 100 may have the job title of Tank Technician. The responsibilities: (1) 190 = maintain front proximity sensors; (2) 191, maintain automatic weapons locking system; and (3) 192, maintain autopilot drive system may be assigned to the user by virtue of his job.

A relationship may be defined between the responsibility and a remote device (block 502). A device component may capture this relationship, such as in the form of a software object or as a set of database tables. The remote device may be represented by identifying information, such as a device identifier or a software object. In this way, given a user, the remote device assigned to the user may be identified by determining what responsibility component the user belongs to and referencing the remote device associated with that responsibility component in the appropriate device component. For example, the tank technician may be assigned a laptop computer that he may use when troubleshooting tank malfunctions in the field. The device component may map the responsibility component including the responsibilities for the Tank Technician job to the laptop computer.

The responsibility may be associated with first data (data and applications) required to fulfill the tasks of the responsibility. For example, responsibility 190 (maintain front proximity sensors) may be associated with part descriptions, manufacturer schematics, manuals, manufacturer customer support numbers, and the like for the front sensor array. The proximity sensors may be manufactured by company C1 and have a model number of M1. An example data set for 190 may include:
[M1 schematics]
[M1 part descriptions]
[M1 manuals]
[C1 contact info].

The weapons locking system may also be manufactured by company C1 and have a model of M2. In addition to schematics, product descriptions, and manuals, there may be data for valid test data. The data for the weapons system (responsibility 191) may include:
[M2 schematics]
[M2 manuals]
[M2 product descriptions]
[m2 test data]
[C1 contact info]

The drive system may be manufactured by C3 and have a model number of M3. The data for 192 may include:
[M3 product description]
[M3 schematics]
[M3 manuals]

The responsibilities 190, 191, and 192 may be associated with diagnostic tools, communications applications to contact the manufacturer on a direct line, parts ordering applications, communications programs (such as instant messenger or electronic mail) and programs to display the content (such as PDF or post script viewers). The applications for 190 may include:
[PDF viewer] to display manuals, product descriptions
[internet telephone] to contact manufacturer directly
[wireless internet client]
[CAD viewer] to display schematics
[sensor proximity diagnostic application]
[parts ordering application]

The applications for 191 may include:
[PDF viewer] to display manuals, product descriptions
[internet telephone] to contact manufacturer directly
[wireless internet client]
[CAD viewer] to display schematics
[weapons locking system diagnostic application]
[parts ordering application]

The applications for 192 may include:
[post script viewer] for viewing manuals for drive system
[internet telephone] to contact manufacturer directly
[email program to contact manufacturer]
[wireless internet client]
[CAD viewer] to display schematics
[drive system diagnostic application]
[parts ordering application]

The data and applications associated with the responsibilities assigned to the user (first data) may be gathered (block 504). The first data may be stored in the responsibility component. Alternatively, the responsibility component may include a reference where the data and applications may be found. For example, a database may store the data and applications (such as the data and applications for responsibilities 190, 191, and 192), and the responsibility component may include the location within the database where the data and applications may be found.

The data and applications may include dependencies. These dependencies may refer to additional data and applications required for the responsibilities. The first data may be examined to determine whether any dependencies exist (block 506). If dependencies exist (block 508), then the dependencies may be gathered as well. For example, the additional data and applications for the diagnostic tools may include the manuals, customer service numbers, and the like. For example, the diagnostic tools may be manufactured by company C4 and have product models of M4, M5, and M6 respectively.

The additional data for 190 may include:
[M4 manuals]
[C4 contact info]

The additional data for 191 may include:
[M5 manuals]
[C4 contact info]

The additional data for 192 may include:
[M6 manuals]

Once all of the data and applications have been gathered, the data and applications may be sent to an installation component (block 512). Alternatively, if no dependencies existed, the first data may be sent to the installation component (block 514). The installation component may facilitate the installation of the data and applications on to the remote device (block 516).

In one example embodiment, duplicates in the data and applications may be removed before the data and applications are sent to the installation component. For example, the collection of the data and applications may be shown as follows.

Prior to eliminating duplicates, the data and applications may include:
190:
   [M1_schematics]
   [M1_part_descriptions]
   [M1_manuals]
   [C1_contact info]
   [PDF viewer] to display manuals, product descriptions
   [internet telephone] to contact manufacturer directly
   [wireless internet client]
   [CAD viewer] to display schematics
   [sensor proximity diagnostic application]
   [parts ordering application]
   [M4_manuals]
   [C4_contact info]
191:
   [M2_schematics]
   [M2_manuals]
   [M2_product descriptions]
   [m2_test data]
   [C1_contact info]
   [PDF viewer] to display manuals, product descriptions
   [internet telephone] to contact manufacturer directly
   [wireless internet client]
   [CAD viewer] to display schematics
   [weapons locking system diagnostic application]
   [parts ordering application]
   [M5_manuals]
   [C4_contact info]
192:
   [M3_product description]
   [M3_schematics]
   [M3_manuals]
   [post script viewer] for viewing manuals for drive system
   [internet telephone] to contact manufacturer directly
   [email program to contact manufacturer]
   [wireless internet client]
   [CAD viewer] to display schematics
   [drive system diagnostic application]
   [parts ordering application]
   [M6_manuals]
   [C4_contact info]
The duplicates may be removed and the data combined in a single data set as follows:
   [M1_schematics]
   [M1_part_descriptions]
   [M1_manuals]
   [C1_contact info]
   [PDF viewer] to display manuals, product descriptions
   [internet telephone] to contact manufacturer directly
   [wireless internet client]
   [CAD viewer] to display schematics
   [sensor proximity diagnostic application]
   [parts ordering application]
   [M4_manuals]
   [C4_contact info]
   [M2_schematics]
   [M2_manuals]
   [M2_product descriptions]
   [m2_test data]
   [weapons locking system diagnostic application]
   [M5_manuals]
   [M3_product description]
   [M3_schematics]
   [M3_manuals]
   [post script viewer] for viewing manuals for drive system
   [email program to contact manufacturer]
   [drive system diagnostic application]
   [M6_manuals]
Note that the following data and applications may be removed from 191:
   [PDF viewer] to display manuals, product descriptions
   [internet telephone] to contact manufacturer directly
   [wireless internet client]
   [CAD viewer] to display schematics
   [parts ordering application]
[C4_contact info] **[60]** Note also that the following data and applications may be removed from 192:
   [internet telephone] to contact manufacturer directly
   [wireless internet client]
   [CAD viewer] to display schematics
   [parts ordering application]
   [C4_contact info]
**[61]** This may yield the minimum set of data to be installed on the remote device.

Several embodiments of the present invention are specifically illustrated and described herein.

## Claims

1. A computer-implemented system (13) for distributing data and applications to a remote device (12; 150-158) comprising:
a responsibility component (16; 120-128) configured to store a relationship between a user (18; 110-118) and a responsibility (132-138), the responsibility (132-138) denoting a task for which the user (18; 110-118) is responsible, wherein each responsibility is associated with one or more data and applications;
a device component (14; 140-148) configured to store a relationship between the responsibility component (16; 120-128) and the remote device (12; 150-158);
a data aggregation component (20) configured to automatically gather and store data and applications required by the responsibility (132-138); and
an installation component (24) configured to install the data and applications on to the remote device (12; 150-158), wherein the remote device (12; 150-158) comprises an input device (11) that allows data and applications to be installed on the remote device (12; 150-158),
wherein the installation component (24) receives the data and applications from the data aggregation component (20) and automatically uploads the data and applications to the remote device (12; 150-158) by sending the data and applications to the input device (11) of the remote device (12; 150-158) via a data communications channel,
wherein the installation component (24) comprises software configured to proxy into the remote device (12; 150-158),
wherein the input device (11) comprises authentication software configured to authenticate the installation component (24) such that after authentication of the installation component (24), the input device (11) receives commands from the installation component (24) to install the data and applications on the remote device (12; 150-158),
wherein the input device (11) translates the received commands from the installation component (24) into actual read, write, and/or execute operations on the remote device (12; 150-158),
wherein the data aggregation component (20) is further configured to automatically gather the data and applications to be stored in the data aggregation component (20) by following a chain of data dependencies (22) for the responsibility (132-138), said chain of data dependencies (22) including a cascading series of data and applications, that depend on the data and applications in second data (32),
wherein the responsibility component (16; 120-128) stores methods to assign additional responsibilities (132-138) to the user, to return responsibilities (132-138) assigned to the user, to remove a responsibility (132-138) from the user and/or remove all responsibilities (132-138) assigned to the user.

2. The system (13) of claim 1, further comprising:
a second responsibility component (122-128) configured to store a relationship between the user (110-118) and a second responsibility (132-138),
wherein the device component (14; 140-148) is further configured to store a relationship between the second responsibility component (122-128) and the remote device (12, 150-158), and the data aggregation component (20) is further configured to automatically gather and store data and applications required by the second responsibility (132-138).

3. The system (13) of claim 1, wherein the device component (14; 140-148) is further configured to store a relationship between the responsibility component (16; 120-128) and a second remote device (12, 152-158), and the installation component (24) is further configured to install the data and applications on to the second remote device (12, 152-158).

4. The system (13) of claim 1, wherein the remote device (12; 150-158) is a laptop computer.

5. The system (13) of claim 1, wherein the data and applications includes applications required by the responsibility (132-138).

6. The system (13) of claim 1, further comprising:
a monitoring component (34) configured to monitor for changes to the user (18; 110-118), responsibility (132-138), or data and applications required by the responsibility (132-138),
wherein if a change exists, the data aggregation component (20) updates the data and applications accordingly.

7. A computer-implemented method for distributing data and applications to a remote device (12; 150-158) comprising:
associating a user (18; 110-118) with a responsibility (132-138), the association stored in a responsibility component (16; 120-128), and the responsibility (132-138) denoting the task for which the user (18; 110-118) is responsible, wherein each responsibility is associated with one or more data and applications;
associating the responsibility (132-138) with the remote device (12; 150-158);
automatically gathering, by a data aggregation component (20), data and applications required by the responsibility (132-138); and
installing, by an installation component (24), the data and applications required by the responsibility (132-138) on to the remote device (12; 150-158),
wherein the remote device (12; 150-158) comprises an input device (11) that allows data and applications to be installed on the remote device (12; 150-158),
wherein the installation component (24) receives the data and applications from the data aggregation component (20) and automatically uploads the data and applications to the remote device (12; 150-158) by sending the data and applications to the input device (11) of the remote device (12; 150-158) via a data communications channel,
wherein the installation component (24) comprises software configured to proxy into the remote device (12; 150-158),
wherein the input device (11) comprises authentication software configured to authenticate the installation component (24) such that after authentication of the installation component (24), the input device (11) receives commands from the installation component (24) to install the data and applications on the remote device (12; 150-158),
wherein the input device (11) translates the received commands from the installation component (24) into actual read, write, and/or execute operations on the remote device (12; 150-158),
automatically gathering the data and applications required by the responsibility (132-138) to be stored by following a chain of data dependencies for the responsibility (132-138), said chain of data dependencies (22) including a cascading series of data and applications, that depend on the data and applications in second data (32),
wherein the responsibility component (16; 120-128) stores methods to assign additional responsibilities (132-138) to the user, to return responsibilities (132-138) assigned to the user, to remove a responsibility (132-138) from the user and/or remove all responsibilities (132-138) assigned to the user.

8. The method of claim 7, further comprising:
associating the user (110-118) with a second responsibility (132-138);
associating the second responsibility (132-138) with the remote device (12, 150-158);
automatically gathering data and applications required for the second responsibility (132-138); and
installing the data and applications required by the second responsibility (132-138) on to the remote device (12, 150-158).

9. The method of claim 7, further comprising:
associating the responsibility (132-138) with a second remote device (12, 150-158); and
installing data and applications required by the responsibility (132-138) on to the second remote device (12; 150-158).

10. The method of claim 7, further comprising:
monitoring the data and applications required for the responsibility (132-138); and
if a change exists in the data and applications required for the responsibility (132-138), gathering the data and applications.

11. A program storage device readable by a processing apparatus, the device embodying a program of instructions executable by the processor to perform the steps of:
associating a user (18; 110-118) with a responsibility (132-138), the association stored in a responsibility component (16; 120-128), the responsibility (132-138) denoting the task for which the user (18; 110-118) is responsible, wherein each responsibility is associated with one or more data and applications;
associating the responsibility (132-138) with a remote device (12; 150-158);
automatically gathering, by a data aggregation component (20), data and applications required by the responsibility (132-138); and
installing, by an installation component (24), the data and applications required by the responsibility (132-138) on to the remote device (12; 150-158), wherein the remote device (12; 150-158) comprises an input device (11) that allows data and applications to be installed on the remote device (12; 150-158),
wherein the installation component (24) receives the data and applications from the data aggregation component (20) and automatically uploads the data and applications to the remote device (12; 150-158) by sending the data and applications to the input device (11) of the remote device (12; 150-158) via a data communications channel,
wherein the installation component (24) comprises software configured to proxy into the remote device (12; 150-158),
wherein the input device (11) comprises authentication software configured to authenticate the installation component (24) such that after authentication of the installation component (24), the input device (11) receives commands from the installation component (24) to install the data and applications on the remote device (12; 150-158),
wherein the input device (11) translates the received commands from the installation component (24) into actual read, write, and/or execute operations on the remote device (12; 150-158),
automatically gathering the data and applications required by the responsibility (132-138) to be stored by following a chain of data dependencies for the responsibility (132-138), said chain of data dependencies (22) including a cascading series of data and applications, that depend on the data and applications in second data (32),
wherein the responsibility component (16; 120-128) stores methods to assign additional responsibilities (132-138) to the user, to return responsibilities (132-138) assigned to the user, to remove a responsibility (132-138) from the user and/or remove all responsibilities (132-138) assigned to the user.

## Patentansprüche

1. Computerimplementiertes System (13) zum Verteilen von Daten und Anwendungen an eine entfernte Vorrichtung (12; 150-158), umfassend:
eine Verantwortlichkeitskomponente (16; 120-128), die konfiguriert ist, eine Beziehung zwischen einem Nutzer (18; 110-118) und einer Verantwortlichkeit (132-138) zu speichern, wobei die Verantwortlichkeit (132-138) eine Aufgabe bezeichnet, für die der Nutzer (18; 110-118) verantwortlich ist, wobei jede Verantwortlichkeit mit einer oder mehreren Daten und Anwendungen assoziiert bzw. verknüpft ist;
eine Vorrichtungskomponente (14; 140-148), die konfiguriert ist, eine Beziehung zwischen der Verantwortlichkeitskomponente (16; 120-128) und der entfernten Vorrichtung (12; 150-158) zu speichern;
eine Datenaggregations- bzw. -verdichtungskomponente (20), die konfiguriert ist, Daten und Anwendungen, die von der Verantwortlichkeit (132-138) benötigt werden, automatisch zu erfassen und zu speichern; und
eine Installationskomponente (24), die konfiguriert ist, die Daten und Anwendungen auf der entfernten Vorrichtung (12; 150-158) zu installieren, wobei die entfernte Vorrichtung (12; 150-158) eine Eingabevorrichtung (11) umfasst, die erlaubt, dass Daten und Anwendungen auf der entfernten Vorrichtung (12; 150-158) installiert werden,
wobei die Installationskomponente (24) die Daten und Anwendungen von der Datenaggregationskomponente (20) empfängt und die Daten und Anwendungen automatisch auf die entfernte Vorrichtung (12; 150-158) hochlädt, indem die Daten und Anwendungen über einen Datenkommunikationskanal an die Eingabevorrichtung (11) der entfernten Vorrichtung (12; 150-158) gesendet werden,
wobei die Installationskomponente (24) Software umfasst, die konfiguriert ist, als Proxy in die entfernte Vorrichtung (12; 150-158) zu fungieren,
wobei die Eingabevorrichtung (11) Authentifizierungssoftware umfasst, die konfiguriert ist, die Installationskomponente (24) zu authentifizieren, so dass nach der Authentifizierung der Installationskomponente (24) die Eingabevorrichtung (11) Befehle von der Installationskomponente (24) empfängt, die Daten und Anwendungen auf der entfernten Vorrichtung (12; 150-158) zu installieren,
wobei die Eingabevorrichtung (11) die empfangenen Befehle von der Installationskomponente (24) in tatsächliche Lese-, Schreib- und/oder Ausführ-Operationen auf der entfernten Vorrichtung (12; 150-158) übersetzt;
wobei die Datenaggregationskomponente (20) ferner konfiguriert ist, die Daten und Anwendungen, die in der Datenaggregationskomponente (20) zu speichern sind, automatisch durch Folgen einer Kette von Datenabhängigkeiten (22) für die Verantwortlichkeit (132-138) zu erfassen, wobei die Kette von Datenabhängigkeiten (22) eine kaskadierende Reihe von Daten und Anwendungen enthält, die von den Daten und Anwendungen in zweiten Daten (32) abhängen,
wobei die Verantwortlichkeitskomponente (16; 120-128) Methoden zum Zuweisen von zusätzlichen Verantwortlichkeiten (132-138) zu dem Nutzer speichert, um dem Nutzer zugewiesene Verantwortlichkeiten (132-138) zurückzugeben, eine Verantwortlichkeit (132-138) von dem Nutzer zu entfernen und/oder alle dem Nutzer zugewiesenen Verantwortlichkeiten (132-138) zu entfernen.

2. System (13) nach Anspruch 1, ferner umfassend:
eine zweite Verantwortlichkeitskomponente (122-128), die konfiguriert ist, eine Beziehung zwischen dem Nutzer (110-118) und einer zweiten Verantwortlichkeit (132-138) zu speichern,
wobei die Vorrichtungskomponente (14; 140-148) ferner konfiguriert ist, eine Beziehung zwischen der zweiten Verantwortlichkeitskomponente (122-128) und der entfernten Vorrichtung (12; 150-158) zu speichern, und die Datenaggregationskomponente (20) ferner konfiguriert ist, Daten und Anwendungen, die von der zweiten Verantwortlichkeit (132-138) benötigt werden, automatisch zu erfassen und zu speichern.

3. System (13) nach Anspruch 1, wobei die Vorrichtungskomponente (14; 140-148) ferner konfiguriert ist, eine Beziehung zwischen der Verantwortlichkeitskomponente (16; 120-128) und einer zweiten entfernten Vorrichtung (12; 150-158) zu speichern, und die Installationskomponente (24) ferner konfiguriert ist, die Daten und Anwendungen auf der zweiten entfernten Vorrichtung (12; 150-158) zu installieren.

4. System (13) nach Anspruch 1, wobei die entfernte Vorrichtung (12; 150-158) ein Laptop-Computer ist.

5. System (13) nach Anspruch 1, wobei die Daten und Anwendungen Anwendungen enthalten, die von der Verantwortlichkeit (132-138) benötigt werden.

6. System (13) nach Anspruch 1, ferner umfassend:
eine Überwachungskomponente (34), die konfiguriert ist, Änderungen des Nutzers (18; 110-118), der Verantwortlichkeit (132-138) oder der von der Verantwortlichkeit (132-138) benötigten Daten und Anwendungen zu überwachen,
wobei, wenn es eine Änderung gibt, die Datenaggregationskomponente (20) die Daten und Anwendungen entsprechend aktualisiert.

7. Computerimplementiertes Verfahren zum Verteilen von Daten und Anwendungen an eine entfernte Vorrichtung (12; 150-158), umfassend:
Assoziieren bzw. Verknüpfen eines Nutzers (18; 110-118) mit einer Verantwortlichkeit (132-138), wobei die Assoziierung bzw. Verknüpfung in einer Verantwortlichkeitskomponente (16; 120-128) gespeichert wird und die Verantwortlichkeit (132-138) eine Aufgabe bezeichnet, für die der Nutzer (18; 110-118) verantwortlich ist, wobei jede Verantwortlichkeit mit einer oder mehreren Daten und Anwendungen assoziiert bzw. verknüpft wird;
Assoziieren bzw. Verknüpfen der Verantwortlichkeit (132-138) mit der entfernten Vorrichtung (12; 150-158);
automatisches Erfassen, durch eine Datenaggregations- bzw. -verdichtungskomponente (20), Daten und Anwendungen, die von der Verantwortlichkeit (132-138) benötigt werden; und
Installieren, durch eine Installationskomponente (24), der Daten und Anwendungen, die von der Verantwortlichkeit (132-138) benötigt werden, auf der entfernten Vorrichtung (12; 150-158),
wobei die entfernte Vorrichtung (12; 150-158) eine Eingabevorrichtung (11) umfasst, die erlaubt, dass Daten und Anwendungen auf der entfernten Vorrichtung (12; 150-158) installiert werden,
wobei die Installationskomponente (24) die Daten und Anwendungen von der Datenaggregationskomponente (20) empfängt und die Daten und Anwendungen automatisch auf die entfernte Vorrichtung (12; 150-158) hochlädt, indem die Daten und Anwendungen über einen Datenkommunikationskanal an die Eingabevorrichtung (11) der entfernten Vorrichtung (12; 150-158) gesendet werden,
wobei die Installationskomponente (24) Software umfasst, die konfiguriert ist, als Proxy in die entfernte Vorrichtung (12; 150-158) zu fungieren,
wobei die Eingabevorrichtung (11) Authentifizierungssoftware umfasst, die konfiguriert ist, die Installationskomponente (24) zu authentifizieren, so dass nach der Authentifizierung der Installationskomponente (24) die Eingabevorrichtung (11) Befehle von der Installationskomponente (24) empfängt, die Daten und Anwendungen auf der entfernten Vorrichtung (12; 150-158) zu installieren,
wobei die Eingabevorrichtung (11) die empfangenen Befehle von der Installationskomponente (24) in tatsächliche Lese-, Schreib- und/oder Ausführ-Operationen auf der entfernten Vorrichtung (12; 150-158) übersetzt;
automatisches Erfassen der von der Verantwortlichkeit (132-138) benötigten Daten und Anwendungen, die zu speichern sind, durch Folgen einer Kette von Datenabhängigkeiten (22) für die Verantwortlichkeit (132-138), wobei die Kette von Datenabhängigkeiten (22) eine kaskadierende Reihe von Daten und Anwendungen enthält, die von den Daten und Anwendungen in zweiten Daten (32)abhängen,
wobei die Verantwortlichkeitskomponente (16; 120-128) Methoden zum Zuweisen von zusätzlichen Verantwortlichkeiten (132-138) zu dem Nutzer speichert, um dem Nutzer zugewiesene Verantwortlichkeiten (132-138) zurückzugeben, eine Verantwortlichkeit (132-138) von dem Nutzer zu entfernen und/oder alle dem Nutzer zugewiesenen Verantwortlichkeiten (132-138) zu entfernen.

8. Verfahren nach Anspruch 7, ferner umfassend:
Assoziieren bzw. Verknüpfen des Nutzers (110-118) mit einer zweiten Verantwortlichkeit (132-138);
Assoziieren bzw. Verknüpfen der zweiten Verantwortlichkeit (132-138) mit der entfernten Vorrichtung (12; 150-158);
automatisches Erfassen von Daten und Anwendungen, die für die zweite Verantwortlichkeit (132-138) benötigt werden; und
Installieren der Daten und Anwendungen, die von der zweiten Verantwortlichkeit (132-138) benötigt werden, auf der entfernten Vorrichtung (12; 150-158).

9. Verfahren nach Anspruch 7, ferner umfassend:
Assoziieren bzw. Verknüpfen der Verantwortlichkeit (132-138) mit einer zweiten entfernten Vorrichtung (12; 150-158); und
Installieren von Daten und Anwendungen, die von der Verantwortlichkeit (132-138) benötigt werden, auf der zweiten entfernten Vorrichtung (12; 150-158).

10. Verfahren nach Anspruch 7, ferner umfassend:
Überwachen der Daten und Anwendungen, die für die Verantwortlichkeit (132-138) benötigt werden; und
wenn es eine Änderung der Daten und Anwendungen gibt, die für die Verantwortlichkeit (132-138) benötigt werden, Erfassen der Daten und Anwendungen.

11. Programmspeichervorrichtung, die von einer Verarbeitungseinrichtung lesbar ist, wobei die Vorrichtung ein Programm aus Instruktionen verkörpert, die von dem Prozessor ausführbar sind, um die Schritte durchzuführen:
Assoziieren bzw. Verknüpfen eines Nutzers (18; 110-118) mit einer Verantwortlichkeit (132-138), wobei die Assoziierung bzw. Verknüpfung in einer Verantwortlichkeitskomponente (16; 120-128) gespeichert wird, wobei die Verantwortlichkeit (132-138) die Aufgabe bezeichnet, für die der Nutzer (18; 110-118) verantwortlich ist, wobei jede Verantwortlichkeit mit einer oder mehreren Daten und Anwendungen assoziiert bzw. verknüpft wird;
Assoziieren bzw. Verknüpfen der Verantwortlichkeit (132-138) mit einer entfernten Vorrichtung (12; 150-158);
automatisches Erfassen, durch eine Datenaggregations- bzw. -verdichtungskomponente (20), Daten und Anwendungen, die von der Verantwortlichkeit (132-138) benötigt werden; und
Installieren, durch eine Installationskomponente (24), der Daten und Anwendungen, die von der Verantwortlichkeit (132-138) benötigt werden, auf der entfernten Vorrichtung (12; 150-158), wobei die entfernte Vorrichtung (12; 150-158) eine Eingabevorrichtung (11) umfasst, die erlaubt, dass Daten und Anwendungen auf der entfernten Vorrichtung (12; 150-158) installiert werden,
wobei die Installationskomponente (24) die Daten und Anwendungen von der Datenaggregationskomponente (20) empfängt und die Daten und Anwendungen automatisch auf die entfernte Vorrichtung (12; 150-158) hochlädt, indem die Daten und Anwendungen über einen Datenkommunikationskanal an die Eingabevorrichtung (11) der entfernten Vorrichtung (12; 150-158) gesendet werden,
wobei die Installationskomponente (24) Software umfasst, die konfiguriert ist, als Proxy in die entfernte Vorrichtung (12; 150-158) zu fungieren,
wobei die Eingabevorrichtung (11) Authentifizierungssoftware umfasst, die konfiguriert ist, die Installationskomponente (24) zu authentifizieren, so dass nach der Authentifizierung der Installationskomponente (24) die Eingabevorrichtung (11) Befehle von der Installationskomponente (24) empfängt, die Daten und Anwendungen auf der entfernten Vorrichtung (12; 150-158) zu installieren,
wobei die Eingabevorrichtung (11) die empfangenen Befehle von der Installationskomponente (24) in tatsächliche Lese-, Schreib- und/oder Ausführ-Operationen auf der entfernten Vorrichtung (12; 150-158) übersetzt;
automatisches Erfassen der von der Verantwortlichkeit (132-138) benötigten Daten und Anwendungen, die zu speichern sind, durch Folgen einer Kette von Datenabhängigkeiten (22) für die Verantwortlichkeit (132-138), wobei die Kette von Datenabhängigkeiten (22) eine kaskadierende Reihe von Daten und Anwendungen enthält, die von den Daten und Anwendungen in zweiten Daten (32) abhängen,
wobei die Verantwortlichkeitskomponente (16; 120-128) Methoden zum Zuweisen von zusätzlichen Verantwortlichkeiten (132-138) zu dem Nutzer speichert, um dem Nutzer zugewiesene Verantwortlichkeiten (132-138) zurückzugeben, eine Verantwortlichkeit (132-138) von dem Nutzer zu entfernen und/oder alle dem Nutzer zugewiesenen Verantwortlichkeiten (132-138) zu entfernen.

## Revendications

1. Système mis en oeuvre par ordinateur (13) de distribution de données et d'applications à un dispositif à distance (12 ; 150 à 158) comprenant :
un composant de responsabilité (16 ; 120 à 128) configuré pour stocker une relation entre un utilisateur (18 ; 110 à 118) et une responsabilité (132 à 138), la responsabilité (132 à 138) dénotant une tâche dont l'utilisateur (18; 110 à 118) est responsable, dans lequel chaque responsabilité est associée à une ou plusieurs données et applications ;
un composant de dispositif (14 ; 140 à 148) configuré pour stocker une relation entre le composant de responsabilité (16 ; 120 à 128) et le dispositif à distance (12 ; 150 à 158) ;
un composant d'agrégation de données (20) configuré pour rassembler automatiquement et stocker des données et applications requises par la responsabilité (132 à 138) ; et
un composant d'installation (24) configuré pour installer les données et applications sur le dispositif à distance (12 ; 150 à 158), dans lequel le dispositif à distance (12 ; 150 à 158) comprend un dispositif d'entrée (11) qui permet à des données et applications d'être installées sur le dispositif à distance (12 ; 150 à 158),
dans lequel le composant d'installation (24) reçoit les données et applications du composant d'agrégation de données (20) et télécharge automatiquement vers l'amont les données et applications sur le dispositif à distance (12; 150 à 158) en envoyant les données et applications au dispositif d'entrée (11) du dispositif à distance (12 ; 150 à 158) par le biais d'un canal de communications de données, dans lequel le composant d'installation (24) comprend un logiciel configuré pour servir de serveur mandataire dans le dispositif à distance (12 ; 150 à 158),
dans lequel le dispositif d'entrée (11) comprend un logiciel d'authentification configuré pour authentifier le composant d'installation (24) de sorte qu'après l'authentification du composant d'installation (24), le dispositif d'entrée (11) reçoit des commandes du composant d'installation (24) d'installer les données et applications sur le dispositif à distance (12 ; 150 à 158),
dans lequel le dispositif d'entrée (11) traduit les commandes reçues du composant d'installation (24) en des opérations de lecture, écriture et/ou exécution réelles sur le dispositif à distance (12 ; 150 à 158),
dans lequel le composant d'agrégation de données (20) est en outre configuré pour rassembler automatiquement les données et applications devant être stockées dans le composant d'agrégation de données (20) en suivant une chaîne de dépendances de données (22) pour la responsabilité (132 à 138), ladite chaîne de dépendances de données (22) incluant une série en cascade de données et applications qui dépendent des données et applications dans des secondes données (32),
dans lequel le composant de responsabilité (16 ; 120 à 128) stocke des procédés d'attribution de responsabilités supplémentaires (132 à 138) à l'utilisateur, de renvoi de responsabilités (132 à 138) attribuées à l'utilisateur, de retrait d'une responsabilité (132 à 138) de l'utilisateur et/ou de retrait de toutes les responsabilités (132 à 138) attribuées à l'utilisateur.

2. Système (13) selon la revendication 1, comprenant en outre :
un second composant de responsabilité (122 à 128) configuré pour stocker une relation entre l'utilisateur (110 à 118) et une seconde responsabilité (132 à 138),
dans lequel le composant de dispositif (14 ; 140 à 148) est en outre configuré pour stocker une relation entre le second composant de responsabilité (122 à 128) et le dispositif à distance (12, 150 à 158), et le composant d'agrégation de données (20) est en outre configuré pour rassembler automatiquement et stocker des données et applications requises par la seconde responsabilité (132 à 138).

3. Système (13) selon la revendication 1, dans lequel le composant de dispositif (14 ; 140 à 148) est en outre configuré pour stocker une relation entre le composant de responsabilité (16 ; 120 à 128) et un second dispositif à distance (12, 152 à 158), et le composant d'installation (24) est en outre configuré pour installer les données et applications sur le second dispositif à distance (12, 152 à 158).

4. Système (13) selon la revendication 1, dans lequel le dispositif à distance (12 ; 150 à 158) est un ordinateur portable.

5. Système (13) selon la revendication 1, dans lequel les données et applications incluent des applications requises par la responsabilité (132 à 138).

6. Système (13) selon la revendication 1, comprenant en outre :
un composant de surveillance (34) configuré pour surveiller des changements de l'utilisateur (18 ; 110 à 118), la responsabilité (132 à 138) ou des données et applications requises par la responsabilité (132 à 138),
dans lequel, si un changement existe, le composant d'agrégation de données (20) met à jour les données et applications en conséquence.

7. Procédé mis en oeuvre par ordinateur de distribution de données et d'applications à un dispositif à distance (12 ; 150 à 158) comprenant :
associer un utilisateur (18 ; 110 à 118) à une responsabilité (132 à 138), l'association étant stockée dans un composant de responsabilité (16 ; 120 à 128), et la responsabilité (132 à 138) dénotant la tâche dont l'utilisateur (18 ; 110 à 118) est responsable, dans lequel chaque responsabilité est associée à une ou plusieurs données et applications ;
associer la responsabilité (132 à 138) au dispositif à distance (12 ; 150 à 158) ;
rassembler automatiquement par un composant d'agrégation de données (20) des données et applications requises par la responsabilité (132 à 138) ; et
installer par un composant d'installation (24) les données et applications requises par la responsabilité (132 à 138) sur le dispositif à distance (12 ; 150 à 158),
dans lequel le dispositif à distance (12 ; 150 à 158) comprend un dispositif d'entrée (11) qui permet à des données et applications d'être installées sur le dispositif à distance (12 ; 150 à 158),
dans lequel le composant d'installation (24) reçoit les données et applications du composant d'agrégation de données (20) et télécharge automatiquement vers l'amont les données et applications sur le dispositif à distance (12 ; 150 à 158) en envoyant les données et applications au dispositif d'entrée (11) du dispositif à distance (12 ; 150 à 158) par le biais d'un canal de communications de données,
dans lequel le composant d'installation (24) comprend un logiciel configuré pour servir de serveur mandataire dans le dispositif à distance (12 ; 150 à 158),
dans lequel le dispositif d'entrée (11) comprend un logiciel d'authentification configuré pour authentifier le composant d'installation (24) de sorte qu'après l'authentification du composant d'installation (24), le dispositif d'entrée (11) reçoit des commandes du composant d'installation (24) d'installer les données et applications sur le dispositif à distance (12 ; 150 à 158),
dans lequel le dispositif d'entrée (11) traduit les commandes reçues du composant d'installation (24) en des opérations de lecture, écriture et/ou exécution réelles sur le dispositif à distance (12 ; 150 à 158),
rassembler automatiquement les données et applications requises par la responsabilité (132 à 138) devant être stockées en suivant une chaîne de dépendances de données pour la responsabilité (132 à 138), ladite chaîne de dépendances de données (22) incluant une série en cascade de données et applications qui dépendent des données et applications dans des secondes données (32),
dans lequel le composant de responsabilité (16 ; 120 à 128) stocke des procédés d'attribution de responsabilités supplémentaires (132 à 138) à l'utilisateur, de renvoi de responsabilités (132 à 138) attribuées à l'utilisateur, de retrait d'une responsabilité (132 à 138) de l'utilisateur et/ou de retrait de toutes les responsabilités (132 à 138) attribuées à l'utilisateur.

8. Procédé selon la revendication 7, comprenant en outre :
associer l'utilisateur (110 à 118) à une seconde responsabilité (132 à 138) ;
associer la seconde responsabilité (132 à 138) au dispositif à distance (12, 150 à 158) ;
rassembler automatiquement des données et applications requises pour la seconde responsabilité (132 à 138) ; et
installer les données et applications requises par la seconde responsabilité (132 à 138) sur le dispositif à distance (12, 150 à 158).

9. Procédé selon la revendication 7, comprenant en outre :
associer la responsabilité (132 à 138) à un second dispositif à distance (12, 150 à 158) ; et
installer les données et applications requises par la responsabilité (132 à 138) sur le second dispositif à distance (12 ; 150 à 158).

10. Procédé selon la revendication 7, comprenant en outre :
surveiller les données et applications requises pour la responsabilité (132 à 138) ; et
si un changement existe dans les données et applications requises pour la responsabilité (132 à 138), rassembler les données et applications.

11. Dispositif de stockage de programme lisible par un appareil de traitement, le dispositif mettant en oeuvre un programme d'instructions exécutables par le processeur pour réaliser les étapes consistant à :
associer un utilisateur (18; 110 à 118) à une responsabilité (132 à 138),
l'association étant stockée dans un composant de responsabilité (16 ; 120 à 128),
la responsabilité (132 à 138) dénotant la tâche dont l'utilisateur (18 ; 110 à 118) est responsable, dans lequel chaque responsabilité est associée à une ou plusieurs données et applications ;
associer la responsabilité (132 à 138) à un dispositif à distance (12 ; 150 à 158) ;
rassembler automatiquement par un composant d'agrégation de données (20) des données et applications requises par la responsabilité (132 à 138) ; et
installer par un composant d'installation (24) les données et applications requises par la responsabilité (132 à 138) sur le dispositif à distance (12 ; 150 à 158), dans lequel le dispositif à distance (12 ; 150 à 158) comprend un dispositif d'entrée (11) qui permet à des données et applications d'être installées sur le dispositif à distance (12 ; 150 à 158),
dans lequel le composant d'installation (24) reçoit les données et applications du composant d'agrégation de données (20) et télécharge automatiquement vers l'amont les données et applications sur le dispositif à distance (12 ; 150 à 158) en envoyant les données et applications au dispositif d'entrée (11) du dispositif à distance (12 ; 150 à 158) par le biais d'un canal de communications de données,
dans lequel le composant d'installation (24) comprend un logiciel configuré pour servir de serveur mandataire dans le dispositif à distance (12 ; 150 à 158),
dans lequel le dispositif d'entrée (11) comprend un logiciel d'authentification configuré pour authentifier le composant d'installation (24) de sorte qu'après l'authentification du composant d'installation (24), le dispositif d'entrée (11) reçoit des commandes du composant d'installation (24) d'installer les données et applications sur le dispositif à distance (12 ; 150 à 158),
dans lequel le dispositif d'entrée (11) traduit les commandes reçues du composant d'installation (24) en des opérations de lecture, écriture et/ou exécution réelles sur le dispositif à distance (12 ; 150 à 158),
rassembler automatiquement les données et applications requises par la responsabilité (132 à 138) devant être stockées en suivant une chaîne de dépendances de données pour la responsabilité (132 à 138), ladite chaîne de dépendances de données (22) incluant une série en cascade de données et applications qui dépendent des données et applications dans des secondes données (32),
dans lequel le composant de responsabilité (16 ; 120 à 128) stocke des procédés d'attribution de responsabilités supplémentaires (132 à 138) à l'utilisateur, de renvoi de responsabilités (132 à 138) attribuées à l'utilisateur, de retrait d'une responsabilité (132 à 138) de l'utilisateur et/ou de retrait de toutes les responsabilités (132 à 138) attribuées à l'utilisateur.
